# EUROPEAN PATENT SPECIFICATION

(11) **EP 2 967 061 B1**
(45) Date of publication and mention of the grant of the patent: **21.06.2017**
(21) Application number: 14722798.7
(22) Date of filing: 21.02.2014
(51) Int. Cl.: A01N 43/54, A01P 21/00

(54) **USE OF URIDINE FOR ENHANCEMENT OF PLANT STRESS TOLERANCE**
VERWENDUNG VON URIDIN ZUR VERBESSERUNG DER STRESSTOLERANZ VON PFLANZEN
UTILISATION DE URIDINE POUR DE MISE EN VALEUR DES PLANTES TOLÉRANCE AU STRESS

(30) Priority: 21.02.2013 TR 201302102; 21.02.2013 TR 201302103; 20.02.2014 TR 201401995
(43) Date of publication of application: 20.01.2016
(73) Proprietor: Uludag Üniversitesi Teknoloji transfer ofisi Ticaret ve Sanayi Anonim Sirketi, Bursa (TR); Cansev, Asuman, Bursa (TR); Gülen, Hatice, 34060 Istanbul (TR); Kesici Zengin, Müge, Bursa (TR); Ergin, Sergül, Eskisehir (TR); Cansev, Mehmet, Bursa (TR); Kumral, Nabi Alper, 16059 Görükle Nilüfer Bursa (TR)
(72) Inventor: CANSEV, Asuman, Bursa (TR); GÜLEN, Hatice, 34060 Istanbul (TR); KESICI ZENGIN, Müge, Bursa (TR); ERGIN, Sergül, Eskisehir (TR); CANSEV, Mehmet, Bursa (TR); KUMRAL, Nabi Alper, 16059 Görükle Nilüfer Bursa (TR)
(74) Representative: Dereligil, Ersin
(86) International application number: PCT/TR2014/000051
(87) International publication number: WO 2014/129996

(56) References cited:
- WO-A2-2012/167023
- DE-A1- 2 730 152
- JP-A- 2001 199 812
- US-A- 3 291 592
- US-A1- 2011 130 285
- Suge Hiroshi ET AL: "Chemical control of plant growth and development. IV. Promotion of flowering induced by uracil , uridylic acid, and several growth regulators in winter wheat", Nippon Sakumotsu Gakkai Kiji, 1 January 1963 (1963-01-01), XP055126675, DOI: 10.1626/jcs.32.77 Retrieved from the Internet: URL:https://www.jstage.jst.go.jp/article/j cs1927/32/1/32_1_77/_pdf [retrieved on 2014-07-03]
- DATABASE BIOSIS [Online] BIOSCIENCES INFORMATION SERVICE, PHILADELPHIA, PA, US; 1990, TOMAR R ET AL: "EFFECT OF PLANT GROWTH REGULATOR AND THYMINE TREATMENT ON ROOTING OF CUTTINGS OF PROSOPIS-CINERARIA L MACBRIDE", XP002726650, Database accession no. PREV199191118094 & TOMAR R ET AL: "EFFECT OF PLANT GROWTH REGULATOR AND THYMINE TREATMENT ON ROOTING OF CUTTINGS OF PROSOPIS-CINERARIA L MACBRIDE", AGRICULTURAL AND BIOLOGICAL RESEARCH, vol. 6, no. 2, 1990, pages 94-97, ISSN: 0970-1907
- T. HASEGAWA ET AL: "Isolation and indentification of a light.induced growth inhibitor in diffusates from blue light-illumionated oat (Avena sativa L.) coleoptile tips", PLANT GROWTH REGULATION, vol. 33, 2001, pages 175-179, XP55302141,

## Description

### The Related Art

The invention relates to the use of uridine for increasing the tolerances against biotic and abiotic stress factors.

### The Prior Art

Although stress is physically defined as force applied to unit area, in biological terms, it is defined as the impact of an external factor on an organism (Levitt, 1980). Stress factors affecting agricultural production are classified as biotic and abiotic factors. While patogens, microorganisms, weeds, insects etc. are evaluated as biotic stress factors; temperature, drought, radiation, salinity, plant nutrients, light, flood, mechanical impacts (wind, snow and ice mantle), air pollution, toxins etc. environmental factors are defined as abiotic stress.

Abiotic stress conditions, besides negatively affecting growth and development of plants, also cause increase in lose of efficiency more than 50% in fundamental products (Wang et. al., 2004). Various external and internal factors, especially the genetic structures are effective in tolerance of plants against abiotic stresses and defence mechanisms in physiological and molecular levels play role against these problems.

Stress causes some physiological, biochemical, and molecular changes in plant metabolism (Levitt 1980). In plants, most of the changes that occur during adapting to high temperatures are reversible. However, if the magnitude of the stress is high, changes that are irreversible may occur and may cause death of the plant.

Environmental factors of a region significantly affects the growth of plant types or kinds and the most important one among these factors is the temperature. Temperature stress recently increasing together with global warming causes efficiency and dry substance ratio losses especially in moderate climate regions (Levitt 1980, Giaveno and Ferrero 2003, Wahid et al. 2007). Human activities cause increase of carbondioxide, methane, chlorofluorocarbon, and nitrogen oxide etc. greenhouse gas concentrations found in the atmosphere, which contributes to global warming (Wahid et. al. 2007). According to IPCC (Intergovernmental Panel on Climatic Change) 2012 report; global temperature is expected to increase at around 1-3 °C towards the mid-21^{st} century, while it is expected to increase 2-5 °C u ntil the end of the 21^{st} century.

Temperature stress is generally defined as the increase of temperature above the threshold for a certain time that causes irreversible damages in plant growth and development. Temporary increase in environmental temperature around 10-15 °C is defined as temperature shock or temperature stress. However, temperature stress occurs according to density (degree temperature), time period, and rate of increase of temperature (Eri 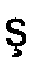 2003).

Cellular damages are caused by the presence of reactive oxygen derivatives (ROS) occurring due to oxidative stress triggered by temperature (Kumar et. al. 2007). Superoxide (O2⁻), hydrogen peroxide (H₂O₂), and hydroxyl radicals (OH⁻), which are known as ROS, are formed as a result of interaction of metabolism with oxygen. ROS inhibit the enzymes and have harmful effect on important cellular components and their production is significantly increased under high stress conditions (McKersie and Lehsem 1994). Plants and other organisms have developed various mechanisms in order to reduce and repair the damages caused by ROS. Molecular defence mechanism of plants is a part of environmental stress factors and enables gaining stress tolerance (Peet and Willits 1998).

For instance; under stress conditions, various plant types accumulate various osmolites such as sugars and sugar alcohols (poliols), proline, tertiary, and quaternary ammonium compounds, and tertiary sulfonium compounds (Sairam and Tyagi 2004). Hormones such as abscisic acid (ABA) and ethylene (C₂H₄) regulate various physiological events by means of triggering signal molecules during stress (Larkindale and Huang 2005). Moreover, high temperature stress causes accumulation of phenolic compounds, which are the most significant secondary metabolites taking part in tolerance against abiotic stress in plants (Wahid and Ghazanfar 2006, Wahid 2007). Another defence system developed by plants against stress is the antioxidant defence system (Foyer et. al. 1994). The antioxidant defence system of plants is formed of antioxidant molecule and enzymes (Alscher et. al. 1997). By means of complex cooperation of enzymatic and non-enzymatic antioxidants, control of ROS concentrations and repairment of oxidative damages are possible (Smirnoff 2005).

Another one of the defence systems taking part in abiotic stress tolerance is the synthesis of stress proteins. Protection of protein structures and functions under stress conditions is very important for survival of the cell (Wang et. al. 2004). Temperature stress also has negative impacts on the protein structure and activity (Wery et. al. 1993). It is found that normal cellular proteins are reduced, whereas heat shock proteins (HSP) are increased when plants are exposed to high temperature. HSP's are responsible for protein folding, mounting, translocation, and destruction in various normal cellular process and prevent re-folding and denaturation of proteins under stress conditions (Hartl 1996, Boston et. al. 1996, Wang et. al. 2004).

Exposure to extreme temperature changes, salinity, drought etc. environmental stresses leads to lack of water in plant tissue. Under these conditions, plants try to survive by synthesizing and accumulating various osmolites (or osmoprotectants) in order to be able to prevent the loss of the water found in their cells (Williamson et. al. 2002). Metabolic regulation made by means of accumulation of various organic substances is a fundamental strategy for survival of plants and their protection against extreme environmental conditions. Besides their ability of regulating the osmotic pressure of cellular cytoplasm under stress conditions such as freezing, drought etc., these metabolites also stabilize the cellular membranes and proteins (Bohnert and Jensen 1996; McNeil et. al. 1999). Osmolites are generally found in stable state within the cell, can not be metabolized easily, and do not have any toxic effect against cellular functions even when they are accumulated in high concentrations (Charron et. al. 2002, Peel et. al. 2009). Therefore, they are important for adaptation of plant cells against various negative environmental conditions (Yancey 1994).

Among the quaternary ammonium compounds of osmolites responding to dehydration stresses in plants, the most commonly known is glycine betain (GlyBet) (Venkatesan and Chellappan 1998, Mansour 2000, Mohanty et. al. 2002, Yang et. al. 2003). With the accumulation of these compounds, low water potential occurs in the cell and in this case water enters into cell. There are various studies about the healing effects of GlyBet on the damages formed at cellular membranes and proteins due to stress (Brady et. al., 1984; Paleg et. al., 1984; Arakawa and Timasheff, 1985; Incharoensakdi et. al., 1986; Ashihara et. al., 1997; Mansour 1998).

As disclosed above, following determination of the internal roles of GlyBet under stress conditions for various plant types, studies have been made showing that external administration of this molecule is also effective. It is shown that external GlyBet administrations increase low temperature stress tolerance in plant species such as *Arabidopsis thaliana, Solanum tuberosum, Fragaria x ananassa, Medicago sativa, Triticum aestivum, Zea mays* etc. (Zhao et. al. 1992, Somersalo et al. 1996, Allard et. al. 1998, Sakamoto and Murata 2000, WeiBing and Rajashekar 2001, Xing and Rajashekar 2001, Park et. al. 2003, Park et. al. 2006). For example, it is shown that external administration of GlyBet increases tolerance against frost in cabbage (Sakai and Yoshida 1968) and clover (Zhao et. al. 1992).

In external administration of GlyBet, it can easily be taken from the leaves (Park et. al. 2006). For instance, it is found that big portion of GlyBet administered on the leaves of tomato plant is absorbed by the leaves and transferred to cytosol (Park et. al. 2006). It is reported that radioactive-labelled GlyBet is transferred from the leaves of turnip plant (Brassica rapa L.) to the roots within 2 hours. In the study, it is also reported that, after 24 hours, all members of the plant carry glycine betain (Makela et. al. 1996). In tomato plant, following application of GlyBet through the leaf, it is found to be accumulated in all meristamatic cells comprising sprout and shoot of the flower. In this study, it is found that GlyBey is transported to the actively growing and developing regions via phloem (Park et al. 2003).

As one of the substances used in external applications for tolerance against stress, spermidine, among the polyamine class, is shown to increase high temperature tolerance in tomato at 4 mM concentration (Murkowski 2001).

Besides these, the abscisic acid (ABA) and the jasmonic acid among the hormones for increasing stress tolerance are known to have protective effects in cellular base. However, these substances are not commonly used in agricultural production. Moreover, since the protective effect of the plant nutrient copper against stress is known, external applications of copper-containing preparations have practical significance in commercial applications. These preparations are commonly used in agricultural production since they are inexpensive and easy to apply. However, since these preparations are applied on the plants via spraying, washed by rain water and thus accumulate in soil and water sources, they have the potential to cause environmental pollution. Therefore, there is a need for alternative strategies to improve stress tolerance in plants. In this context, pyrimidines, having proven effects against cellular damages in animal organisms, are believed to have potential protecting, stress tolerance-increasing, and stress supressing etc. effects also in plants.

Pyrimidines are heterocyclic organic aromatic compounds having chemically similar characteristics with benzene and pyridine. The pyrimidine nucleosides uridine, cytidine, and thymidine and their phosphate-bound nucleotide forms are normally found in the body and take part in various physiological functions. Among these, the functions which have been studied especially well are the ones that are related to the roles they take in glycogen metabolism and nucleic acid synthesis.

Polyamine extracts obtained from plants have been reported to prevent stress in plants (EP2486920A1). In this invention, a patent document is mentioned (Japanese Unexamined Patent Application Publication No. 2005-330213) wherein the stress-preventive effect of uridine is examined in relation to nucleic acids.

A patent is published about providing strength against stress together with growth and increase in efficiency by means of synthesis of enzyme in relation to cellulose and transfer of the DNA index controlling this to a plant cell through bacteria (CA2264957A1). Here, in synthesis of enzymes related to cellulose, the precursor is emphasized to be uridine diphosphate glucose (UDP-glucose). As a result of culture studies, presence of uridine diphosphate glucose is stated to be indirectly important in terms of growth, efficiency, and stress tolerance in plants.

US2011/130285A numbered document relates to a composition for promoting formation of root nodules of Leguminosae plant. By increasing the root nodule formation, the size of the plant is expected to be increased.

In Document US2011/130285A, the growth and development of plants are only related with the plants that form nodules in their roots. In said document, there is no information, assay, or proof about promotion of growth and development by said chemicals for the plants that do not form nodules in their roots. In the main claim that discloses the scope of protection of said application, reference is directly made to this plant.

Another subject related to document US2011/130285A is the increase of plant tolerance against some stresses, together with the increase of root development, when root nodule formation is increased. In Document US2011/130285A, the increase in the subsurface dry weight occurs in relation with the increase in nodules. However, no information or proof has been provided with regard to the root dry weight or stress tolerance increase in plants that do not form nodules in their roots.

US3291592A numbered document relates to formation of complexes of uracil and its derivatives with various novel molecules and obtaining forms that have better solubility in water or oil with the formed novel complex, and also relates to the use of these complexes as a substance that provides growth modification in sugar cane plant by preventing flowering and suppressing terminal bud growth. In said application; sugar efficiency is increased in harvest, since saccharose accumulation is increased. From the given characteristics, it can be understood that the application does not promote, and instead stops growth and development. Moreover, what is intended by growth modification is both increasing, reducing, and/or stopping the growth.

The article entitled "Chemical control of plant growth and development IV. Promotion of flowering induced by uracil, uridylic acid, and, several growth regulators in winter wheat" disclosed that uridylic acid and uracil chemicals promote a generative parameter, flowering.

JP2001199812A numbered document relates to a composition comprising uracil, glutamic acid, and proline. The similar document JP2001199812A is formed by combination of 3 chemicals. Said application does not comprise any data about the effect of each individual chemical on the growth and development of plants. Each chemical has its own specific characteristics. Therefore, each raw material added to the composition differentiates and customizes the composition of the invention due to its specific characteristics.

The article entitled "Effect of plant growth regulator and thymine treatment on rooting of cuttings of prosopis-cinerarial macbride" relates to promotion of rooting by the chemical thymine. However, in said article the chemical thymine is not used alone, but used in combination with other growth regulators (rooting promoters). No data or expression has been provided stating that thymine promotes rooting alone.

WO2012/167023A2 numbered document relates to compounds that improve resistance of plants against drought and biotic and abiotic stress. These compounds are listed as apyrases and extracellular nucleotides.

DE2730152A1 numbered document relates to the chemicals orotic acid and uracil that promote germination and growth of plants at non-optimum temperatures.

The article entitled "Isolation and identification of a light-induced growth inhibitor in diffusates from blue light-illuminated oat (Avena sativa L.)" coleoptile tips" reported that uridine plays a role in the phototropism of oat coleoptiles suggesting a putative mechanism for growth regulation, but not stress tolerance.

However, in above-mentioned patents, no findings have been encountered in relation with the effects of uridine covered by the present invention under stress conditions.

**PATENT REFERENCES**

| **Patent cited** | **File Admission Date** | **Publication Date** | **Owner of Application** | **Title** |
|---|---|---|---|---|
| EP2486920A1 | 28 Sep 2009 | 15 Aug 2012 | Toyo Boseki Kabushiki Kaisha | Stress-alleviating agent comprising plant-derived polyamine-containing extract as active ingredient |
| CA2264957A1 | 09 Sep 1997 | 19 Mar 1998 | B.C. Research Inc. | A process of increasing plant growth and yield and modifying cellulose production in plants |
| US2011130285A1 | 30 Now 2010 | 02 Jun 2011 | Watanabe Kazuhiko [Jp]; Yokoi Daisuke [Jp] (inventor) | Composition For Promoting Root Nodule Formation Of Plants And A Method For Promoting Root Nodule Formation Of Plants |
| US3291592A | 20 April 1964 | 13 Dec 1966 | Du Pont | Method for increasing sugar cane yield |
| | 01 Jan 1963 | | Nippon Sakumotsu Gakkai Kiji | Chemical control of plant growth and development. IV Promotion of |
| | | | | flowering induced by uracil, uridylic acid and several growth regulators in winter wheat |
| JP2001199812A | 14 Jan 2000 | 24 July 2001 | Koyama Hightech Kenkyusho KK | Plant Growth Promoter |
| | 1990 | | Tomar R Et AI | Effect of plant growth regulator and thymine treatment on rooting of cuttings of prosopiscineraria I macbride |
| WO2012167023A2 | 01 Jun 2012 | 06 Dec 2012 | Univ texas [us]; roux stanley j [us]; clark gregory b [us]; steinebrunner iris [de] | Regulation Of Stomatal Apertures By Apyrases And Extracellular Nucleotides |
| DE2730152A1 | 04 July 1977 | 30 Now 1978 | Lonza Ag ± | Promoting low-temp. plant germination and growth - using agents contg. uracil derivs., e.g. orotic acid |
| | 2001 | | Tsuyoshi Hasegawa, Kosumi Yamada, Seiji Kosemura, Shosuke Yamamura, Johan Bruinsma, Kensuke Miyamoto, | Isolation and identification of a light-induced growth inhibitor in diffusates from blue light-illuminated oat coleoptile tips |
| | | | Junichi Ueda, Koji Hasegawa | |

### Chemical Structures of Pyrimidine Compounds

Pyrimidine compounds are heterocyclic organic aromatic compounds chemically similar to benzene and pyridine, and carry one each nitrogen atom at the positions of 1 and 3 of the 6-membered chemical ring. Pyrimidines are found in base, nucleoside, and nucleotide forms.

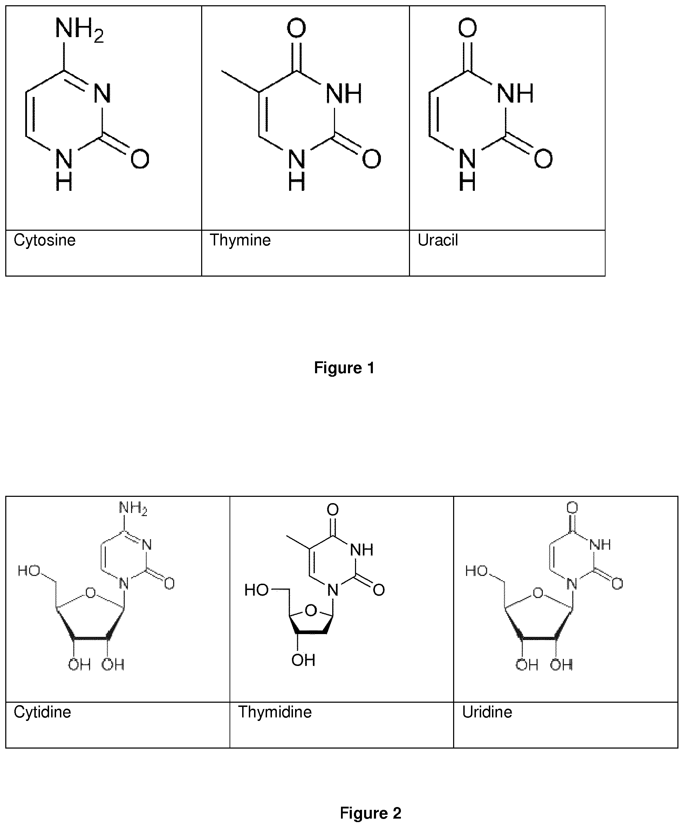

Pyrimidine bases are principally included in the structure of DNA and RNA. While cytosine is found in both DNA and RNA structure, thymine is only found in DNA and uracil is only found in RNA structure. Chemical structure of pyrimidine bases are given in Figure 1.

Figure 1 shows the chemical structures of pyrimidine bases. Pyrimidine nucleosides are formed by addition of a sugar molecule in the form of ribose or 2-deoxyribose to pyrimidine bases. In this reaction, the carbon no 1 of the sugar molecule is combined with the nitrogen no 1 of the pyrimidine base. The pyrimidine nucleoside formed is defined by means of adding "-idine" suffix at the end of the base name (for instance uridine). When ribose is added to bases, the nucleosides formed do not have any suffix, but when 2-deoxyribose is added, the prefix "d-" is added before the name. Chemical structures of pyrimidine nucleosides are given in Figure 2.

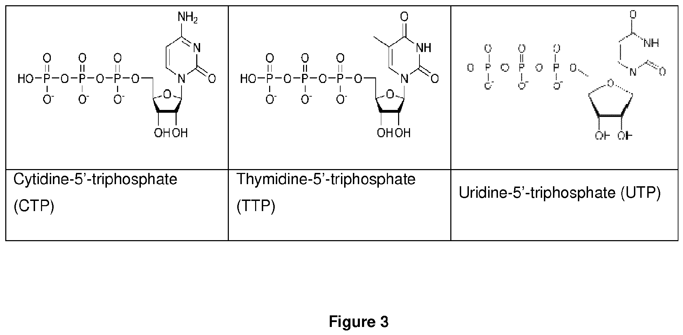

Figure 2 shows the chemical structures of pyrimidine nucleosides. Pyrimidine nucleotides are formed by addition of phosphate groups to nucleosides. The number of phosphate groups added determines the name of that nucleotide; and the prefixes mono-, di-, or tri- phosphate are added to the nucleoside name when one, two, or three phosphate groups are added, respectively. The nucleotides formed when three phosphate groups are added to pyrimidine nucleosides are shown in Figure 3 (In Figure 3, the chemical structures of the pyrimidine nucleotides comprising three phosphate group are given).

### The Purpose of the Invention

The present invention relates to use of uridine for increasing the stress tolerances, which meets above said requirements, eliminates some of the drawbacks, and brings about some additional advantages.

In order to achieve the purposes of the invention, said uridine solution is prepared between 10⁻⁹ - 1 molar.

In order to achieve the purposes of the invention, said solution comprises 0,000244- 244000 mg uridine in 1 litre of water.

In order to achieve the purposes of the invention, said uridine solution is preferably prepared between 10⁻⁵ to 10⁻⁴ molar.

In order to achieve the purposes of the invention, said solution comprises 0,244 - 24,4 mg uridine 1 litre of water.

In order to achieve the purposes of the invention, sowing is made in a way that 1 seed would be present in each viol cell.

In order to achieve the purposes of the invention, said germination is made at 25 °C.

In order to achieve the purposes of the invention, plants are kept under light at 24 °C and 22 °C for 16 hours per day and kept under dark conditions at 20 °C for 8 hours.

For high temperature stress applications, the temperature of the growth cabinet is increased gradually to 35, 40, and 45 °C and kept for 24 hours at each temperature level.

Following application of 45 °C, total amount of sol uble protein is measured in the leaf samples taken from the plants.

### Figures for Better Understanding of the Invention

Figure 1 shows the chemical structures of pyrimidine bases.
Figure 2 shows the chemical structures of pyrimidine nucleosides.
Figure 3 shows the chemical structures of pyrimidine nucleotides comprising three phosphate groups.

### Detailed Description of the Invention

In this detailed description, the preferred embodiments of the use of uridine for increasing the stress tolerances are described for better understanding of the invention without forming any limiting effect.

The invention relates to the use of uridine in agriculture sector for increasing the stress tolerances.

Pyrimidine is the general name of nitrous aromatic bases generally found in nucleic acids and also in some coenzymes and vitamins.

The most basic pyrimidine structure is C₄H₄N₂ and the pyrimidines are the derivatives of this main structure.

The shapes and sizes of pyrimidines and also the ability of forming hydrogen bonds with the purines provide the three-dimensional structures and the biological functions of nucleic acids. Uridine is a pyrimidine nucleoside and a constituent of plant (Ross, 1965) and animal (Pelling, 1959) tissues. Uridine is also the constituent of nucleotides comprising mono-(uridine-5'-monophosphate [UMP]), di-(uridine-5'-diphosphate [UDP]) and tri-phosphate (uridine-5'-triphosphate [UTP]), nucleotide sugars (UDP-glucose and UDP-galactose) (Ross and Cole, 1968) and phospholipid intermediate metabolites (Kennedy and Weiss, 1956) cytidine-5'-triphosphate (CTP) (Genchev and Mandel, 1974) and cytidine-5'-diphosphate choline (CDP-choline) (Cansev et. al., 2005) compounds. Uridine plays role in various physiological functions such as glycogen and phospholipid biosynthesis and protein and lipid glycosylation (Lecca and Ceruti, 2008). RNA synthesis has a vital role in plant growth and development (Oota, 1964) and experimental disintegration of RNA affects growth and development (Brachet, 1954). Membrane phospholipids are also the most important components of cell membranes and cell growth and reproduction are associated with the increase of membrane phospholipid synthesis in both plants (Xue et. al., 2009) and animal cells (Bashir et. al., 1992) and tissues (Wurtman et. al., 2009). It is also shown that UMP, which is a source of uridine, is transformed into uridine after entering into body and reaches the brain (Cansev et. al., 2005) and improves phospholipid production (Wurtman et. al., 2006) or neuron branching and thus neural communication in infant (Cansev et. al., 2009) or adult (Sakamoto et. al., 2007) experimental animals. The uridine added to the neurons in the culture also increases the growth and branching of these cells (Pooler et. al., 2005). With above said characteristics, uridine treatment is found to increase learning and memory functions in experimental animals (Teather and Wurtman, 2006; Holguin et. al., 2008a) and also in environmentally impoverished animals (Holguin et. al., 2008b). In addition, uridine reduces brain damage of laboratory animals in experimental models. For instance, in experimental Parkinson model, uridine administered in the form of UMP ameliorated brain lesion and reduced rotational behaviour, which is the typical indication of damage (Cansev et. al., 2008). Moreover, uridine treatment significantly reduced the level of damage in infant rats, which are exposed to hypoxic ischemic brain damage (Cansev et. al., 2013). Prevention of programmed cell death (apoptosis) mechanism of brain cells by uridine mediated to this effect (Cansev et. al., 2013).

In the prior art, when uridine is used on humans, it is known that it causes diarrhea when it is taken in high oral dosage such as 10 g per day (van Groeningen et. al., 1991) and the dose of 10 g/m² administered intravenously is known to cause shaking (Leyva et. al., 1984).

### Experiment 1: Increase of temperature stress tolerance of plants having uridine chemical administration

In the present invention, said uridine chemical is used on plants.

**The Amount of Uridine Chemical Usage in the Invention:**

| RAW MATERIAL | PREFERRED AMOUNT (gr) | USABLE AMOUNT (gr) |
|---|---|---|
| Uridine | 10⁻⁵ - 10⁻⁴ molar (1 - 100 micromolar) : 2,44 -24,4 mg | 10⁻⁹ - 1 molar (1 nanomolar - 1 molar) : 0,000244- 244000 mg |
| Water | 1 litre | 1 litre |

Said uridine is administered on cucumber (Cucumis sativus) plants in the preferred embodiment of the invention.
- Their sowing is preferably made into vials of 72 such that 1 seed would be present per vial.
- Said seeds are germinated at 25 °C in plant growth cabin.
- Following the stage of germination, 10 ml of uridine solution prepared at 10 or 100 µM concentration is administered to the plants twice a week.
- Water is used as dissolver in order to dissolve uridine (it is preferably dissolved in pure water and at room temperature).

### Preparation of Uridine Solution:

### For the usable amount of the invention:

- In order to prepare 10⁻⁹ M (1 nano molar) solution; 0,000244 mg uridine is dissolved in 1 L of water.
- In order to prepare 1 M (1 molar) solution; 244000 mg uridine is dissolved in 1 L of water.

### For the Preferred Amount of the Invention:

- In order to prepare 10 µM solution; 2,44 mg uridine is dissolved in 1 L of water.
- In order to prepare 100 µM solution; 24,4 mg uridine is dissolved in 1 L of water.
- Uridine solution should be prepared fresh for each administration.
- Plants are grown under light for 16 hours at 24 °C and 22 °C and under dark conditions for 8 hours at 20 °C daily in growth cabinet for 3 weeks until they have 2 actual leaves.
- For high temperature stress applications, the temperature of the growth cabin is increased gradually to 35, 40, and 45 °C and kept for 24 hour s at each temperature level.
- Following application of 45 °C, total amount of soluble protein is measured in the leaf samples taken from the plants.
- Total soluble protein extraction is made by using the method of Arora et. al. (1992, 1997) with some modifications suggested by Gulen and Eris (2003).
   Solution components used in total soluble protein extraction are:
   - 50 mM Borax (Sodium tetraborate)
   - 50 mM ascorbic acid
   - 1 mM PMSF (Phenylmethylsulphonyl)
   - %1 ß-mercaptoethanol
- 5 ml of the extraction solution prepared as given above is taken and homogenized together with 1 g of leaf sample in mortar. Homogenized samples are taken into 15 ml centrifuge tubes and centrifuged for 1,5 hours at 26 000 g and 4 °C. Following centrifuge, the above liquid phase is taken and passed through 0,22 µm diameter filters.
- Total soluble protein amount is determined according to Bradford (1976) method as proposed by Arora and Wisniewski (1994). The amount of protein in the supernatant obtained from the protein extraction is determined according to spectrophotometric measurements. Measurements are made by using single use polycarbonate basins at 595 nm wavelength and 0, 10, 20, 30, 40, 50 µg/µl BSA (Bovine serum albumin) standards are used for calculating total soluble protein amount. BSA stock solution is prepared as 5 mg BSA/ml extraction solution.

In a preferred embodiment of the invention; uridine solutions can be used in the form of application to the soil together with liquid fertilizers at certain ratios (liquid fertilizer components). In a preferred embodiment of the invention; uridine solutions can be used by being added to the plant nutrient components in soilless agriculture applications (plant nutrient components).

In another preferred embodiment of the invention; uridine solutions can be used by being buried into soil after tabletting with suitable filling materials (tablet composition).

In another preferred embodiment of the invention; uridine solutions can be used together with irrigation water in drip irrigation system (drip irrigation).

In another preferred embodiment of the invention; uridine solution can be used in the form of coating by being sprayed onto leaves of plants and to fruits (spraying).

The effects of uridine on plants depend on concentration of application (application dose and frequency) and also application time, the physiological stage of the plant, age of the plant, species or type of the plant, member of the plant and the ecological conditions at the time of application (temperature, light, moisture, wind, soil). As disclosed in the purpose and the method of application of the invention, the applications can be made when the plants are at the seed phase, plantlet, sapling, seedling, trees at the period of yield different physiological and morphological phases. Moreover, it can also be applied on perennial, annual, herbaceous, ligneous, deciduous, evergreen plant types.

### REFERENCES

Allard F., Houde M., Krol M., Ivanov A., Huner N.P.A., Sarhan F. 1998. Betaine improves freezing tolerance in wheat. Plant Cell Physiol. 39, 1194-1202.
Alscher, G.R., Donahue, L.J., Cramer, L.C. 1997. Reactive oxygen species and antioxidants: relationship in gren cells. Physiologia Plantarum., 100: 222-223.
Arakawa T., Timassheff. 1985. The stabilization of proteins by osmolytes. Biophys. J. 47: 411-414.
Ashihara H., Adachi K., Otawa M., Yasumoto E., Fukushima Y., Kato M., Sano H., Sasamoto H., Baba S. 1997. Compatible solutes and inorganic ions in the mangrove plant Avicennia marina and their effects on the activities of enzymes. Zeitschrift für Naturforschung 52: 433-440.
Bashir N, Kuhen K, Taub M (1992) Phospholipids regulate growth and function of MDCK cells in hormonally defined serum free medium. In Vitro Cell Dev Biol. 28A: 663-668.
Bohnert H, Jensen RG. Strategies for engineering water stress tolerance in plants. Trends Biotechnol. 199:14:89-97.
Boston, R.S., Viitanen, P.V., Vierling, E. 1996. Molecular chaperones and protein folding in plants. Plant Mol. Biol., 32:191-222.
Brachet J (1954) Effects of Ribonuclease on the Metabolism of Living Root-Tip Cells. Nature 174: 876- 877.
Brady C.J., Gibson T.S., Barlow E.W.R., Speirs J., Wyn R., Jones G. 1984. Salt tolerance in plants. I. Ions, compatible organic solutes and the stability of plant ribosomes. Plant Cell Environ. 7: 571-578.
Cansev M, Marzloff G, Sakamoto T, Ulus IH, Wurtman RJ (2009) Giving uridine and/or docosahexaenoic acid orally to rat dams during gestation and nursing increases synaptic elements in brains of weanling pups. Dev Neurosci., 31: 181-192.
Cansev M, Minbay Z, Goren B, Yaylagul EO, Cetinkaya M, Koksal N, Alkan T (2013) Neuroprotective effects of uridine in a rat model of neonatal hypoxic-ischemic encephalopathy. Neurosci Lett., 542: 65-70.
Cansev M, Ulus IH, Wang L, Maher TJ, Wurtman RJ (2008) Restorative effects of uridine plus docosahexaenoic acid in a rat model of Parkinson's disease. Neurosci Res., 62: 206-209.
Cansev M, Watkins CJ, van der Beek EM, Wurtman RJ (2005) Oral uridine-5'-monophosphate (UMP) increases brain CDP-choline levels in gerbils. Brain Res 1058: 101-108.
Charron J.-B. F., Breton G., Danyluk J., Muzac I., Ibrahim R.K., Sarhan F. 2002. Molecular and Biochemical Characterization of a Cold-Regulated Phosphoethanolamine N-Methyltransferase from Wheat. Plant Physiol. 129(1): 363-373.
Eri 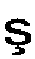 , A.. Bahge Bitkileri Fizyolojisi. Uluda 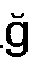 Üniversitesi Ziraat Fakültesi Ders Notlar 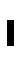 , 2003; No:11, 5th Edition, p. 152.
Foyer, C.H., Descourvieres. P., Kunert, K. 1994. Protection against oxygen radicals: important defence mechanisms studied in transgenic plants. Plant Cell Environ., 17: 507-523.
Genchev DD and Mandel P (1974) CTP synthetase activity in neonatal and adult rat brain, J Neurochem 22: 1027- 1030.
Giaveno C., Ferrero, J. 2003. Introduction of tropical maize genotypes to increase silage production in the central area of Santa Fe. Argentina Crop Breeding and Applied Biotechnology, 3(2): 89-94.
Hartl, F.U. 1996. Molecular chaperones in cellular protein folding. Nature, 381: 571-580.
Hasegawa T, Yamada K, Kosemura S, Yamamura S, Bruinsma J, Miyamoto K, Ueda J, Hasegawa K. 2001. Isolation and identification of a light-induced growth inhibitor in diffusates from blue light-illuminated oat (Avena sativa L.) coleoptile tips. Plant Growth Regulation, 33: 175-179.
Holguin S, Huang Y, Liu J, Wurtman R (2008b) Chronic administration of DHA and UMP improves the impaired memory of environmentally impoverished rats. Behav Brain Res., 191: 11-16.
Holguin S, Martinez J, Chow C, Wurtman R (2008a) Dietary uridine enhances the improvement in learning and memory produced by administering DHA to gerbils. FASEB J., 22: 3938-3946.
Incharoensakdi A., Takabe T., Akazawa T., effect of betaine on enzyme activity and subunit interaction of ribulose-1,5-biphosphate carboxylase/oxygenase from Aphahothece halophytica. Plant Physiol. 81: 1044-1049.
Kumar, M. S., Kumar, G., Srikanthbabu, V., Udayakumar, M. 2007. Assessment of variability in acquired thermotolerance: Potentialoption to study genotypic response and the relevance of stress genes. Journal of Plant Physiology, 164(2): 111-125.
Larkindale, J, Huang, B. 2005. Effects of abcisic acid, salcylic acid, ethylene and hydrogen peroxide in thermotolerance and recovery for creeping bentgrass. Plant Growth Reg., 47: 17-28.
Lecca D and Ceruti S (2008) Uracil nucleotides: from metabolic intermediates to neuroprotection and neuroinflammation. Biochem Pharmacol 75: 1869-1881.
Levitt, J. 1980. Responses of Plants to Environmental Stresses, Vol. I, Academic Pres, New York, pp: 347-370.
Mäkelä P., Peltonen-Sainio P., Jokinen K., Pehu E., Setälä H., Hinkkanen R., Somersalo S. 1996. Uptake and translocation of foliar-applied glycinebetaine in crop plants. Plant Sci. 121: 221-230.
Mansour M.M.F. 1998 Protection of plasma membrane of onion epidermal cells by glycinebetaine and proline against NaCl stress. Plant Physiology and Biochemistry 36 (10): 767-772.
Mansour, M.M.F. 2000. Nitrogen containing compounds and adaptation of plants to salinity stress. Biol. Plant. 43, 491-500.
Mansour, M.M.F. 2000. Nitrogen containing compounds and adaptation of plants to salinity stress. Biol. Plant. 43: 491-500.
McKersie B.D., Leshem, Y.Y. 1994. Stress and stress coping in cultivated plants. Kluwer Academic Publishers, 256 pp.
McNeil SD, Nuccio ML, Hanson AD. 1999. Betaines and related osmoprotectants: targets for metabolic engineering of stress resistance. Plant Physiol. 120:945-949.
Mohanty A., Kathuria H., Ferjani A., Sakamoto A., Mohanty P., Murata N., Tyagi A.K. 2002. Transgenics of an elite indica rice variety Pusa Basmati 1 harbouring the codA gene are highly tolerant to salt stress. Theor. Appl. Genet. 106: 51-57.
Murkowski A. 2001 Heat stress and spermidine: effect on chlorophyll fluorescene in tomato plants. Biologia Plant. 44(1): 53-57.
Oota Y (1964) RNA in Developing Plant Cells. Annu Rev Plant Physiol 15:17-36.
Paleg LG, Stewart GR, Bradbeer JW 1984 Proline and glycine betaine influence protein solvation. Plant Physiol. 75: 974-978.
Park E.J., Jcknic Z., Chen T.H.H. 2006. Exogenous application of glycinebetaine increases chilling tolerance in tomato plants. Plant Cell Physiol. 47, 706-714.
Park, E.J. et al. 2003. Genetic engineering of cold-tolerant tomato via glycinebetaine biosynthesis. Cryobiol. Cryotech. 49, 77-85
Peel GJ, Modolo LV, Pang Y, Dixon RA(2009) The LAP1 MYB transcription factor orchestrates anthocyanidin biosynthesis and glycosylation in Medicago. Plant J 59: 136-149.
Peet, M.M., Willits, D.H. 1998. The effect of night temperature on greenhouse grown tomato yields in warm climate. Agric. Forest Meteorol., 92:191-202.
Pelling G (1959) Chromosomal synthesis of ribonucleic acid as shown by incorporation of uridine labelled with tritium. Nature 184(Suppl 9): 655-656.
Pooler AM, Guez DH, Benedictus R, Wurtman RJ (2005) Uridine enhances neurite outgrowth in nerve growth factor-differentiated PC12 cells. Neuroscience 134: 207-214.
Sairam, R.K., Tyagi, A. 2004. Physiology and molecular biology of salinity stress tolerance in plants. Current Sci., 86: 407-421.
Sakai A., Yoshida S. 1968. The role of sugars and related compounds in variations of freezing resistance, Cryobiol. 5, 160-174.
Sakamoto A. and Murata N. 2000. Genetic engineering of glycinebetaine synthesis in plants: current status and implication for enhancement of stress tolerance. J. Exp. Bot. 51: 81-88.
Sakamoto T, Cansev M, Wurtman RJ (2007) Oral supplementation with docosahexaenoic acid and uridine-5'-monophosphate increases dendritic spine density in adult gerbil hippocampus. Brain Res., 1182: 50-59.
Smirnoff, N. 2005. Antioxidant and Raective Oxygen Species in Plants. Blackwell Publishing Ltd., U.K. p. 302.
Somersalo S., Kyei-Boahen S., Pehu E. 1996. Exogenous glycine betaine application as a possibility to increase low temperature tolerance of crop plants. Nordisk Jordbruksforskning 78: 10.
Teather LA, Wurtman RJ (2006) Chronic administration of UMP ameliorates the impairment of hippocampal-dependent memory in impoverished rats. J Nutr., 136: 2834-2837.
Venkatesan, A., Chellappan, K.P. 1998. Accumulation of proline and glycine betaine in Ipomoea pescaprae induced by NaCl. Biol. Plant. 41, 271-276.
Wahid, A. 2007. Physiological implications of metabolites biosynthesis in net assimilation and heat stress tolerance of sugarcane sprouts. J. Plant Res., 120: 219-228.
Wahid, A., Ghazanfar, A. 2006. Possible involvement of some secondary metabolites in salt tolerance of sugarcane. J. Plant Physiol., 163: 723-730.
Wang, W., Vinocur, B., Shoseyov, O., Altman, A. 2004. Role of plant heat-shock proteins and molecular chaperones in abiotic stress response. Trends in Plant Sci., 9(5): 244-253.
Wang, W., Vinocur, B., Shoseyov, O., Altman, A. 2004. Role of plant heat-shock proteins and molecular chaperones in abiotic stress response. Trends in Plant Sci., 9(5): 244-253.
Weibing X., Rajashekar C.B. 2001. Glycine betaine involvement in freezing tolerance and water stress in Arabidopsis thaliana. Environ. Exp. Bot. 46, 21-28.
Wery, J., Turc, O., Lecoeur, J. 1993. Mechanisms of resistance to cold, heat and drought in cool season legumes, with special reference to chickpea and pea: Breeding for stress tolerance in cool season food legumes, Eds: Singh, K.B., Saxena, M.C., Chichester, U.K., John Wiley and Sons. 271-291.
Williamson, JD (2002) Biotechnology; past, present and future. J. Am. Soc. Hort. Sci. 127:462-466.
Wurtman RJ, Cansev M, Sakamoto T, Ulus IH (2009) Use of phosphatide precursors to promote synaptogenesis. Annu Rev Nutr. 29: 59-87.
Wurtman RJ, Ulus IH, Cansev M, Watkins CJ, Wang L, Marzloff G (2006) Synaptic proteins and phospholipids are increased in gerbil brain by administering uridine plus docosahexaenoic acid orally. Brain Res. 1088: 83-92.
Xing W. and Rajashekar C.B. 2001. Glycine betaine involvement in freezing tolerance and water stress in Arabidopsis thaliana. Environ. Exp. Bot. 46: 21-28.
Xue HW, Chen X, Mei Y (2009) Function and regulation of phospholipid signalling in plants. Biochem J 421: 125-156.
Yancey PH (1994) Compatible and counteracting solutes. in Cellular and Molecular Physiology of Cell Volume Regulation. ed Strange K (CRC Press, Boca Raton, FL), pp 81-109.
Yang W.-J., Rich P.J., Axtell J.D., Wood, K.V., Bonham C.C., Ejeta G., Mickelbart M.V., Rhodes D. 2003. Genotypic variation for glycine betaine in sorghum. Crop Sci. 43, 162-169.
Zhao Y., Aspinall D., Paleg L.G. 1992. Protection of membrane integrity in Medicago sati6a L. by glycine betaine against the effects of freezing, J. Plant Physiol. 140: 541-543.
Zhao Y., Aspinall D., Paleg L.G. 1992. Protection of membrane integrity in Medicago sati6a L. by glycine betaine against the effects of freezing, J. Plant Physiol. 140: 541-543.

## Claims

1. A use of uridine for increasing stress tolerances of plants.

2. The use according to Claim 1, **characterized in that** said uridine is used in 10⁻⁹ to 1 molar solution form.

3. The use according to Claim 2, **characterized in that** said solution comprises 0,000244-244000 mg uridine in 1 litre of water.

4. The use according to Claim 1, **characterized in that** said uridine is used in 10⁻⁵ to 10⁻⁴ molar solution form.

5. The use according to Claim 4, **characterized in that** said solution comprises 2,44 -24,4 mg uridine in 1 litre of water.

6. The use according to any one of the preceding claims, **characterized in that** said solution is applied in soilless agriculture by means of being added to plant nutrients.

7. The use according to any one of the preceding claims, **characterized in that**; said solution is applied by being buried into soil after tabletting with filler materials.

8. The use according to any one of the preceding claims, **characterized in that** said solution is applied together with irrigation water in drip irrigation system.

9. The use according to any one of the preceding claims, **characterized in that** said solution is applied in the form of spraying.

## Patentansprüche

1. Verwendung von Uridin zum Erhöhen von Belastungstoleranzen von Pflanzen.

2. Verwendung nach Anspruch 1, **dadurch gekennzeichnet, dass** das Uridin in Form einer Molarlösung 10⁻⁹ bis 1 verwendet wird.

3. Verwendung nach Anspruch 2, **dadurch gekennzeichnet, dass** die Lösung 0,000244 - 244000 mg Uridin in 1 Liter Wasser umfasst.

4. Verwendung nach Anspruch 1, **dadurch gekennzeichnet, dass** das Uridin in Form einer Molarlösung 10⁻⁵ bis 10⁻⁴ verwendet wird.

5. Verwendung nach Anspruch 4, **dadurch gekennzeichnet, dass** die Lösung 2,44 - 24,4 mg Uridin in 1 Liter Wasser umfasst.

6. Verwendung nach einem der vorherigen Ansprüche, **dadurch gekennzeichnet, dass** die Lösung in erdeloser Landwirtschaft durch Hinzufügen zu Pflanzennährstoffen angewendet wird.

7. Verwendung nach einem der vorherigen Ansprüche, **dadurch gekennzeichnet, dass** die Lösung nach Tablettieren mit Füllmaterialien in der Erde vergraben wird.

8. Verwendung nach einem der vorherigen Ansprüche, **dadurch gekennzeichnet, dass** die Lösung zusammen mit Bewässerungswasser in einem Tropfen-Bewässerungssystem angewendet wird.

9. Verwendung nach einem der vorherigen Ansprüche, **dadurch gekennzeichnet, dass** die Lösung in Form von Sprühen angewendet wird.

## Revendications

1. Utilisation d'uridine pour augmenter la tolérance au stress de plantes.

2. Utilisation selon la revendication 1, **caractérisée en ce que** ladite uridine est utilisée sous forme d'une solution de 10⁻⁹ à 1 molaire.

3. Utilisation selon la revendication 2, **caractérisée en ce que** ladite solution comprend de 0,000244 à 244 000 mg d'uridine par litre d'eau.

4. Utilisation selon la revendication 1, **caractérisée en ce que** ladite uridine est utilisée sous forme d'une solution de 10⁻⁵ à 10⁻⁴ molaire.

5. Utilisation selon la revendication 4, **caractérisée en ce que** ladite solution comprend de 2,44 à 24,4 mg d'uridine par litre d'eau.

6. Utilisation selon l'une quelconque des revendications précédentes, **caractérisée en ce que** ladite solution est appliquée en agriculture hors-sol au moyen de leur ajout aux éléments nutritifs des plantes.

7. Utilisation selon l'une quelconque des revendications précédentes, **caractérisée en ce que** ladite solution est appliquée en étant enterrée dans le sol après une mise en tablette avec des matériaux de charge.

8. Utilisation selon l'une quelconque des revendications précédentes, **caractérisée en ce que** ladite solution est appliquée conjointement avec une eau d'irrigation dans un système d'irrigation goutte à goutte.

9. Utilisation selon l'une quelconque des revendications précédentes, **caractérisée en ce que** ladite solution est appliquée sous la forme d'une pulvérisation.
